# EUROPÄISCHE PATENTANMELDUNG

(11) **EP 2 008 790 A2**
(43) Veröffentlichungstag der Anmeldung: **31.12.2008**
(21) Anmeldenummer: 08405158.0
(22) Anmeldetag: 18.06.2008
(51) Int. Cl.: B29C 45/28

(54) **Nadelverschlussdüsenanordnung**

(30) Priorität: 27.06.2007 CH 10372007
(71) Anmelder: AWM Mold Tech AG, 5630 Muri (CH)
(72) Erfinder: Krummenacher, Josef, 5630 Muri (CH)
(74) Vertreter: Wagner, Kathrin

(57) **Zusammenfassung**

Die vorliegende Erfindung betrifft eine Verteilereinheit (1) für die Zuführung von Giesswerkstoff in einer Spritzgussanlage zur Verarbeitung von thermoplastischen Kunststoffen über ein Heisskanalsystem mit mindestens einer durch eine Verschlussnadel (3) verschliessbaren Nadelverschlussdüse (2). Dabei ist die Verschlussnadel durch ein hydraulisches oder pneumatisches Antriebssystem bewegbar. Die Nadelverschlussdüse hat eine erste Längsachse (L1) und das einen Kolben (13, 14) aufweisende Antriebssystem hat eine zweite Längsachse (L2), wobei die erste Längsachse parallel und seitlich versetzt zur zweiten Längsachse angeordnet ist.

## Beschreibung

### TECHNISCHES GEBIET

Die vorliegende Erfindung betrifft eine Vorrichtung für die Zuführung von Giesswerkstoffen in einem Spritzgussverfahren, insbesondere für ein Heisskanalsystem mit Nadelverschluss, welches eine besonders geringe Einbauhöhe aufweist.

### STAND DER TECHNIK

Nadelverschlusswerkzeuge haben den Vorteil, dass sie einen sauberen Anguss zur Kunststoffverarbeitung ermöglichen. Ein Spritzgusswerkzeug ist ein Werkzeug aus mehreren Baugruppen zur Herstellung grosser Stückzahlen von Kunststoffteilen. Bei mehreren Trennebenen können mehrere Kunststoffteile gleichzeitig in einer Form produziert werden. Der Kunststoff wird mittels eines Zylinders mit hohem Druck durch die Zuführkanäle in die Kavitäten des Werkzeugs gespritzt. Im Heisskanal wird geschmolzener Kunststoffwerkstoff auf Temperatur gehalten. Heisskanalsysteme sind in offene oder geschlossene Systeme unterteilbar, wobei relevant ist, ob der Anspritzpunkt durch eine Angussnadel, pneumatisch, mechanisch, elektrisch oder hydraulisch betätigt wurde. Der Heisskanal endet in der Heisskanaldüse, welche den Übergang zwischen beheizter und unbeheizter Zone im Spritzgusswerkzeug darstellen. Heisskanalsysteme verfügen über ein so genanntes Nadelverschlusssystem, bei dem die Einspritzdüse direkt nach dem Einspritzen und anschliessendem Nachdrücken durch eine Verschlussnadel geschlossen wird.

Im Stand der Technik sind verschiedene Nadelverschluss-Spritzdüsen bekannt. Zum Beispiel stellt die DE 295 04 162 eine Spritzdüse vor, deren Verschlussnadel eine möglichst geringe thermische Belastung erfährt. In der EP 0 558 932 A1 ist eine Mehrfach-Nadelverschluss-Düse vorgestellt, wobei zwei Düsen einen gemeinsamen Kolbenantrieb aufweisen. Die DE 32 49 486 offenbart eine Nadelverschlussdüse mit zwei Antriebskolben. In der US 2003/0180409 A1 sind Systeme mit verschiedenen jeweils hinter der Düse angeordneten Antrieben für die Verschlussnadelbetätigung dargestellt.

### DARSTELLUNG DER ERFINDUNG

Der Erfindung liegt demnach unter anderem die Aufgabe zugrunde, eine Verteilereinheit zur Verfügung zu stellen, welche eine geringe Bauhöhe aufweist.

Der Kern der Erfindung besteht darin, eine Verteilereinheit für die Zuführung von Giesswerkstoff in einer Spritzgussanlage zur Verarbeitung von thermoplastischen Kunststoffen über ein Heisskanalsystem zur Verfügung zu stellen, welche mindestens eine durch eine Verschlussnadel verschliessbaren Nadelverschlussdüse aufweist. Dabei ist die Verschlussnadel durch ein hydraulisches, mechanisches, elektrisches oder pneumatisches Antriebssystem bewegbar. Die Nadelverschlussdüse hat eine erste Längsachse und das mindestens einen Kolben aufweisende Antriebssystem hat eine zweite Längsachse, wobei die erste Längsachse parallel und seitlich versetzt zur zweiten Längsachse angeordnet ist.

Mit anderen Worten wird mit der erfindungsgemässen Verteilereinheit erreicht, dass das Antriebssystem einer Nadelverschlussdüse nicht koaxial mit der Längsachse und hinter der Düse angeordnet ist, sondern dass das Antriebssystem parallel versetzt neben der Nadelverschlussdüse z.B. an respektive neben einem Heisskanalverteilerblock der Verteilereinheit angeordnet ist. Die Längsachse des Antriebssystems fluchtet somit nicht mit der Längsachse der Nadelverschlussdüsen.

Bei herkömmlichen Heisskanalsystemen ist das Antriebssystem, d.h. der Antriebskolben bzw. der Zylinder oder die Führungsssäule koaxial mit der Düse angeordnet. Die koaxiale Anordnung von z.B. zwei Düsen, die in zwei entgegengesetzte Richtungen weisen, hat dann die Folge, dass zwischen den beiden Düsen koaxial auch noch zwei Antriebssysteme, d.h. zwei Kolben bzw. Zylinder angeordnet sind. Der dadurch resultierende Aufbau ist sehr breit, bzw. hat eine grosse Bautiefe. Durch das erfindungsgemässe Versetzen des Antriebs neben die Düse, wird eine koaxiale Anordnung von zwei Düsen mit minimaler Einbautiefe möglich.

Eine seitliche Anordnung des Antriebssystems relativ zur Nadelverschlussdüse bringt den weiteren Vorteil mit sich, dass der Antrieb in den kalten Bereich versetzt wird (d.h. aus dem Bereich, wo heisser Werkstoff im Heisskanal fliesst, heraus), was z.B. die Verwendung eines Hydraulikantriebs möglich macht. Ein Nachteil bei einem im warmen Bereich angeordneten Antriebssystem ist, dass seine grosse Wärmemenge das System schwächen kann. Die Verwendung von Hydraulik lässt einen kleineren Durchmesser des Antriebssystems zu, da das Medium im Wesentlichen nicht komprimierbar ist. Zudem sind die Drücke der Nadelbewegung genauer einstellbar. Durch den kleineren Kolbendurchmesser können kleinere Düsenabstände bzw. Kavitätenabstände eingehalten werden.

Nach einer ersten Ausführungsform der Erfindung weist wird die Verschlussnadel über einen Hebelarm vom Kolben angetrieben, wobei die Verschlussnadel im Wesentlichen senkrecht zum Hebelarm angeordnet ist. Der Kolben des Antriebssystems ist dabei mit seiner Längsachse im Wesentlichen senkrecht zum Hebelarm angeordnet, sodass die Verschlussnadel, der Hebelarm und der Kolben eine im Wesentlichen U-förmige Anordnung beschreiben.

Gemäss einer weiteren bevorzugten Ausführungsform nach der Erfindung ist der Hebelarm dazu geeignet, mit seinem freien Ende mindestens einen an einem einer Werkstoffaustrittsstelle entfernten Ende der Verschlussnadel angeordneten Nadelkopf und bevorzugt zusätzlich eine die Verschlussnadel teilweise umhüllende Distanzhülse zu umgreifen. Dieses Umgreifen koppelt das pneumatisch oder hydraulisch ausgelöste Heben und Senken des Kolbens mit der Bewegung der Verschlussnadel und somit auch mit deren Ein- und Ausfahren, und die Verwendung der Distanzhülse erlaubt eine einfache Regelung von Anschlagspositionen.

Nach einer weiteren Ausführungsform der Erfindung weist die Verteilereinheit mindestens zwei Nadelverschlussdüsen auf, deren Längsachsen bevorzugterweise koaxial angeordnet sind, wobei jede Nadelverschlussdüse einen Düsenkopf mit einer durch die Verschlussnadel verschliessbaren Öffnung für den Austritt des Giesswerkstoffs aufweist. Die Düsenköpfe der beiden Nadelverschlussdüsen weisen bevorzugterweise in entgegengesetzte Richtungen voneinander weg ("back-to-back" Anordnung). Vorzugsweise sind die Verschlussnadeln der jeweils zwei koaxial zueinander angeordneten Nadelverschlussdüsen durch das Antriebssystem bewegbar, wobei das erste Antriebssystem einen ersten Kolben und das zweite Antriebssystem einen zweiten Kolben aufweist, und die beiden Antriebssysteme weisen wenigstens ein gemeinsames Führungselement auf, wobei die Kolben vorzugsweise koaxial angeordnet sind. Das den zwei Verschlussnadeln gemeinsame Führungselement kann beispielsweise ein Führungszylinder sein, der bevorzugterweise in einer axialen Befestigungsbohrung des ersten Kolbens und in einer axialen Bohrung des zweiten Kolbens angeordnet ist. Mit anderen Worten können zwei koaxial angeordnete Kolben vorteilhafterweise einen gemeinsamen Führungszylinder, bevorzugterweise einen in einer axialen Bohrung des/der Kolben angeordneten Führungszylinder aufweisen. Die Bewegung der Kolben wird via Hebelarme auf die Verschlussnadeln übertragen.

Dabei hat das Antriebssystem des Weiteren vorteilhafterweise einen ersten Hohlraum, in dem der erste Kolben mit einem ersten Kopfbereich läuft bzw. beweglich gelagert ist, und gegebenenfalls einen zweiten Hohlraum, in dem der zweite Kolben mit einem in die entgegengesetzte Richtung zum ersten Kopfbereich weisenden zweiten Kopfbereich läuft bzw. beweglich gelagert ist. Der Kopfbereich kann am Kolben angeformt und/oder einstückig mit dem Hebelarm ausgebildet sein.

Vorteilhafterweise ist der erste Kolben mit dem Führungszylinder mittels einer in der ersten axialen Befestigungsbohrung des ersten Kolbens geführten Befestigungsschraube verschraubt, wobei der Führungszylinder in der zweiten axialen Bohrung des zweiten Kolbens, welche bevorzugterweise einen Kugelkäfig aufweist, verschieblich bewegbar ist.

Vorzugsweise sind der erste und der zweite Kolben so ausgestaltet, dass sie geeignet sind, über zwei parallel zueinander angeordnete Hebelarme mindestens zwei Verschlussnadeln, welche in bevorzugt koaxial zueinander angeordneten und in entgegengesetzte Richtungen ausgerichteten Nadelverschlussdüsen beweglich gelagert sind, zu betätigen. Dabei können die zwei Kolben gemeinsam über zwei Hebelarme mindestens zwei Verschlussnadeln betätigen. Es ist aber auch denkbar, dass jeweils ein Kolben über zwei parallel zueinander angeordnete Hebelarme mit zwei Verschlussnadeln gekoppelt ist. Insbesondere ist es vorteilhaft, wenn beide Hebelarme im Antriebssystem für die zwei Verschlussnadeln zuständig sind. Dabei haben die beiden Hebelarme bevorzugterweise den gleichen Querschnitt. Bei einer durch den resp. die Kolben induzierten Bewegung des Hebelarmpaars werden die beiden Hebelarme in Richtung des jeweiligen Düsenkopfes auseinander gepresst, wobei sich eine Spalte bzw. ein doppelter Hub zwischen den beiden Hebelarmen bildet. Jeder Hebelarm drückt wiederum mit seiner Bewegung die beiden Verschlussnadeln koaxial auseinander, d.h. die an der Basis der Verschlussnadeln angeordneten Nadelköpfe bewegen sich beim Ausfahren der Nadeln voneinander weg. Die beiden koaxial zueinander angeordneten Kolben laufen bevorzugterweise in entgegengesetzte Richtungen.

Nach einer weiteren bevorzugten Ausführungsform ist der Hebelarm dazu geeignet, mindestens eine, bevorzugterweise zwei oder mehr Verschlussnadeln, welche in parallel zueinander angeordneten und in die gleiche Richtung ausgerichteten Nadelverschlussdüsen gelagert sind, zu betätigen.

Gemäss einer weiteren bevorzugten Ausführungsform der Erfindung weist die Verteilereinheit mindestens zwei Nadelverschlussdüsen auf, deren Längsachsen parallel und seitlich versetzt zueinander angeordnet sind, wobei die Düsenköpfe der beiden Nadelverschlussdüsen in die gleiche Richtung weisen. Dabei weist jede Nadelverschlussdüse einen Düsenkopf mit einer durch die Verschlussnadel verschliessbaren Öffnung für den Austritt des Giesswerkstoffs auf, und die Verschlussnadeln der Nadelverschlussdüsen sind durch ein gemeinsames Antriebssystem bewegbar.

Der Hebelarm kann gabelförmig zu mindestens zwei Fingern ausgebildet sein, wobei jeweils ein Finger an seinem freien Ende bevorzugterweise eine Ausnehmung aufweist, welche geeignet ist, den Nadelkopf und gegebenenfalls die Distanzhülse der Verschlussnadel zu umgreifen.

Des Weiteren ist es bevorzugt, dass zwei koaxial angeordnete Kolben zusammen mindestens vier Verschlussnadeln antreiben. Dabei ist vorteilhafterweise die Hälfte der vier Nadelverschlussdüsen, in welchen je eine Verschlussnadel aufgenommen ist, auf einer ersten Seite des Heisskanalverteilers angeordnet und die andere Hälfte der Nadelverschlussdüsen an einer der ersten Seite gegenüberliegenden zweiten Seite des Heisskanalverteilers. Bevorzugterweise sind die Nadelverschlussdüsen paarweise an der Verteilereinheit angeordnet.

Nach einer weiteren bevorzugten erfindungsgemässen Ausführungsform weist jeder Hebelarm eine gerade Anzahl von Fingern auf, bevorzugterweise mindestens zwei oder vier Finger, wobei jeder Finger zur Betätigung wenigstens einer Verschlussnadel geeignet ist. Die Finger können alternativ zu einer parallelen Anordnung auch kreis-oder sternförmig am Hebelarm um einen Kolben herum angeordnet sein.

Der Hebelarm greift nach einer weiteren bevorzugten Ausführungsform in mindestens eine Öffnung des Heisskanalverteilerblocks ein, in welchem die mindestens eine Nadelverschlussdüse angeordnet ist. Erfindungsgemäss ist es bevorzugt, dass das mindestens eine Antriebssystem ausserhalb des Heisskanalverteilerblocks bzw. des Heissbereichs angeordnet ist, in welchem der Heisskanal verläuft.

Das Antriebssystem kann auch geeignet sein, mehrere parallel und seitlich versetzt zueinander angeordnete Nadelverschlussdüsen zu bedienen, wobei die Nadelverschlussdüsen entweder über einen gemeinsamen Finger bzw. Balken oder über verschiedene parallel zueinander angeordnete Finger eines Hebelarms mit dem Kolben gekoppelt sind. Bei der Serieanordnung mehrerer Nadelverschlussdüsen entlang eines Balkens kann es zur Stabilisierung von Vorteil sein, wenn am anderen Ende des Balkens ein zweites Antriebssystem, bzw. ein zweiter Kolben angeordnet ist.

Alternativ zu den obigen Ausführungen, in denen ein Führungszylinder in der Verteilereinheit angeordnet ist, ist es auch möglich, eine Verteilereinheit bereitzustellen, wo nur die Führung im Heisskanalverteilerblock angeordnet ist und der eigentliche Hydraulikmechanismus oder Kolbenraum bei Bedarf anschliessbar ist, oder dass ein Hydraulikkolben bei Bedarf für die Nadelbetätigung aufsetzbar ist.

Beim einem vorzentrierten zylindrischen Nadelverschluss wird während der Verschlussbewegung die Nadel zuerst vorzentriert und mittels einer zylindrischen Führung auf die Angussbohrung gebracht. Die US 2004/0256767 A1 erwähnt die Möglichkeit von hydraulischem oder pneumatischem Antrieb für ein Ventil und schildert das Problem, dass eine sehr genaue Anpassung der Verschlussnadel nötig ist, da sich die Bauteile bei Erwärmung thermisch expandieren. Die Endanpassung der Nadelposition ist aber sehr komplex und zeitaufwändig. Ein weiterer Vorteil der vorliegenden Erfindung im Vergleich zum Stand der Technik ist somit bei Verwendung der oben erwähnten Distanzhülse, dass die Verschlussnadel nicht mehr so genau angepasst bzw. zentriert werden muss, sondern dass ihre Position um ihre Ausdehnungsweite bei Erhitzung abweichen kann..

Zudem kann durch die vorliegende Erfindung die Hebelwirkung vermieden werden, da allfällige kraftbedingte Verwinkelungen der Bauteile durch eine gemeinsame Führung kompensierbar sind. Der Weg der Nadel ist fix einstellbar und der Kolben und die Verschlussnadel bewegen sich nicht koaxial zueinander und haben einen eigenen vorderen und hinteren Anschlag.

Etagensysteme haben den Nachteil, dass der Kunststoff viele Umlenkungen erfährt, und dass die Verweilzeit des Kunststoffs in den Kanälen bzw. Bohrungen länger ist als bei normalen Systemen. Bei der vorliegenden Erfindung wird der Kunststoff im Wesentlichen in der Mitte der Verteilereinheit, bzw. im Heisskanalverteilerblock in den Heisskanal eingeführt und wird dann über im Wesentlichen gleichlange Wege mit einer möglichst geringen Anzahl von Umlenkungen auf die verschiedenen Bohrungen verteilt. Somit verringert sich auch die Verweilzeit des Matrials im System.

Weitere bevorzugte Ausführungsformen der Erfindung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
Fig. 1 einen Teilschnitt durch eine Verteilereinheit, wobei Fig. 1a zwei Nadelverschlussdüsen mit eingefahrenen Verschlussnadeln und Fig. 1b zwei Nadelverschlussdüsen mit ausgefahrenen Verschlussnadeln zeigt; und
Fig. 2 eine perspektivische Ansicht eines Antriebssystems mit vier Nadelverschlussdüsen, wobei Fig. 2a vier Nadelverschlussdüsen mit ausgefahrenen Verschlussnadeln und Fig. 2b vier Nadelverschlussdüsen mit eingefahrenen Verschlussnadeln zeigt; und
Fig. 3 eine perspektivische Ansicht der erfindungsgemässen Verteilereinheit mit der Anordnung von 2x16 Nadelverschlussdüsen.

### WEGE ZUR AUSFÜHRUNG DER ERFINDUNG

In der Folge sollen Ausführungsbeispiele zur Dokumentation der vorgeschlagenen Verteilereinheit diskutiert werden. Diese Diskussion der Ausführungsbeispiele dient zur Stützung und soll nicht dazu verwendet werden, den Schutzbereich, wie er in den ebenfalls beigefügten Patentansprüchen definiert ist, einschränkend auszulegen.

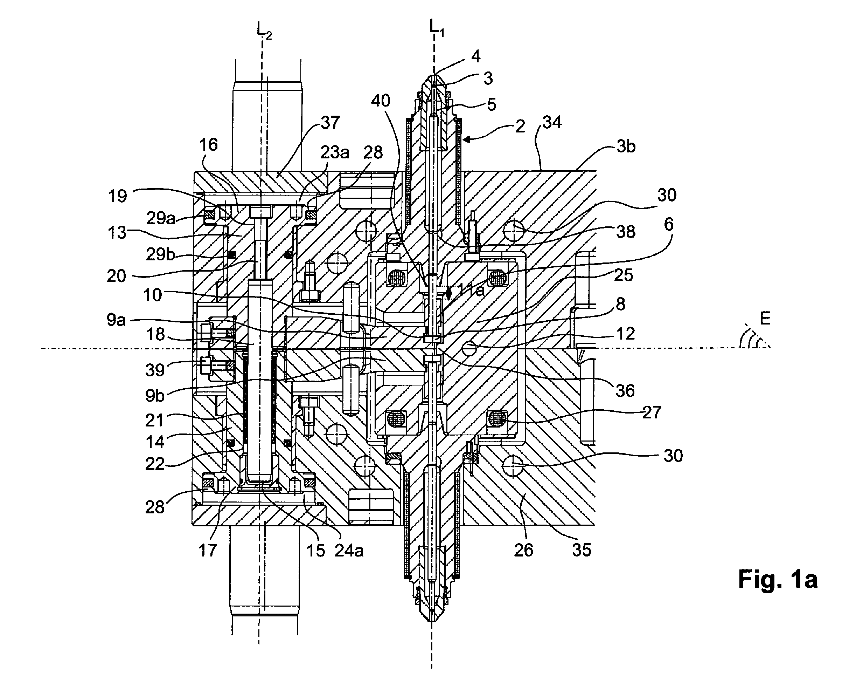

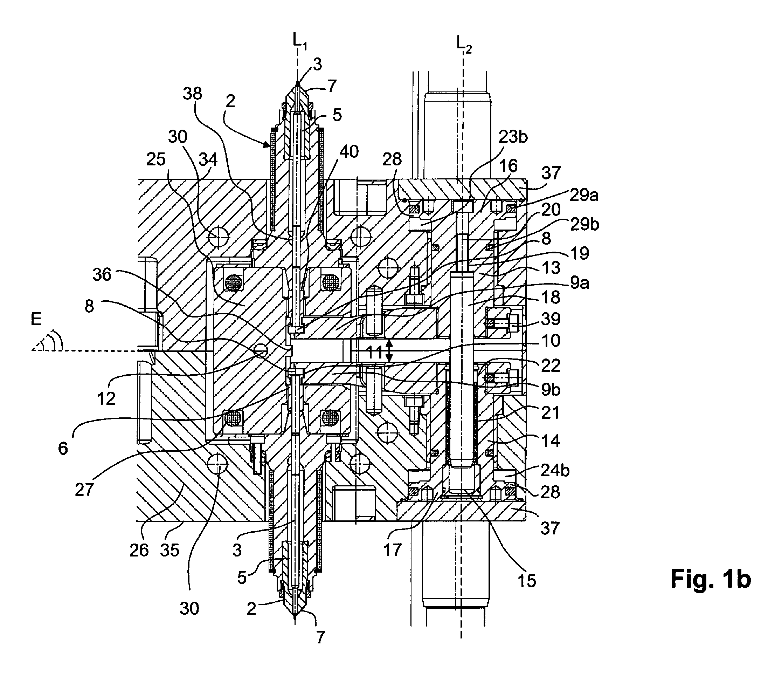

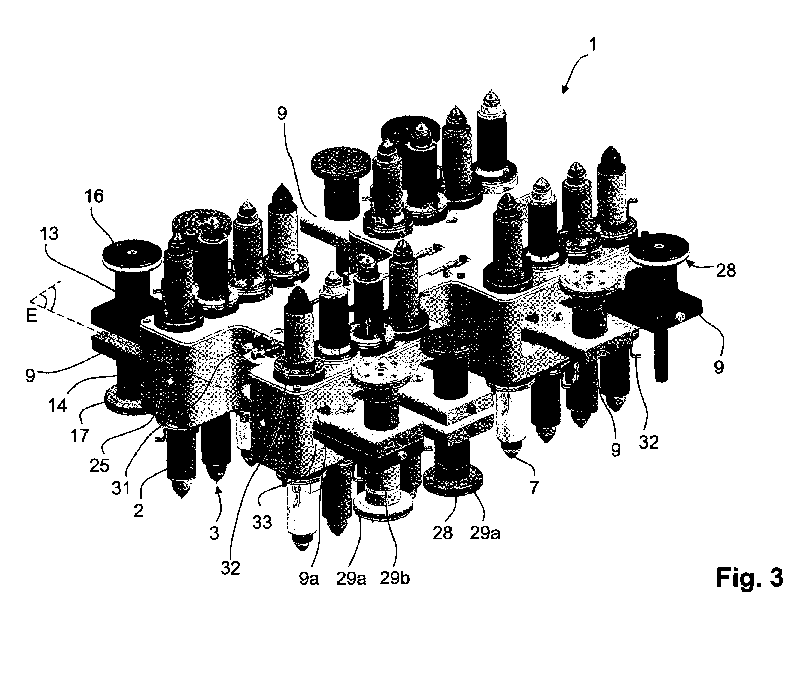

In Figuren 1a und 1b ist ein Teil eines bevorzugten Ausführungsbeispiels einer erfindungsgemässen Verteilereinheit 1 zu sehen. Die Verteilereinheit 1 weist einen über eine Blockheizleitung 31 (vgl. Figur 3) geheizten Heisskanalverteilerblock 25 und über Kühlungskanäle 30 gekühlte Formplatten 26 auf. Auf beiden Seiten 34, 35 der Verteilereinheit 1 sind an sich bekannte Nadelverschlussdüsen 2 koaxial angeordnet, welche entlang ihrer gemeinsamen Längsachse L1 mit ihren Düsenköpfen 7 in entgegengesetzte Richtungen weisen. Seitlich versetzt zu den beiden dargestellten Nadelverschlussdüsen 2 und mit den Nadelverschlussdüsen 2 über zwei Hebelarme 9 gekoppelt ist ein Antriebssystem vorgesehen (in Figur 1a links und in Figur 1b rechts dargestellt). Es ist aber gemäss einer anderen Ausführungsform auch möglich, dass Nadelverschlussdüsen 2 nur auf einer ersten Seite 34 der Verteilereinheit 1 angeordnet sind.

Die Nadelverschlussdüse 2 weist in einer zentralen Bohrung eine verschiebbar beweglich gelagerte Verschlussnadel 3 auf, sowie koaxial dazu einen Werkstoffkanal 5, durch welchen der Werkstoff von der Eintrittsöffnung 38 zu der im konisch dargestellten Düsenkopf 7 angeordneten Nadelführung bzw. Öffnung 4 der Nadelverschlussdüse 2 geführt wird. Die Verschlussnadel 3 ist in der Lage, den Werkstoffkanal 5 zur Nadelführung bzw. zur Öffnung 4 hin zu verschliessen, wobei es wie hier dargestellt möglich, aber nicht nötig ist, dass die Verschlussnadel 3 dabei aus der Düsenöffnung 4 austritt. Beim Verschliessen des Kanals 5 bewegen sich die Verschlussnadeln 3 der beiden dargestellten koaxialen Nadelverschlussdüsen 2 mit Ihren Spitzen voneinander weg. Die dargestellten Nadelverschlussdüsen 2 sind am Heisskanalverteilerblock 25 angeordnet, bzw. darin verankert, ragen aber über die auf dem Heisskanalverteilerblock 25 aufgesetzten gekühlten Formplatten 26 hinaus.

Das dargestellte Antriebssystem gemäss einer ersten bevorzugten Ausführungsform der Erfindung weist zwei koaxiale Kolben 16, 17 auf, deren gemeinsame Längsachse L2 parallel und seitlich versetzt zur Längsachse L1 der Nadelverschlussdüsen 2 angeordnet ist. Die beiden dargestellten Kolben 16, 17 weisen je eine zentrale axiale Bohrung 19, 22 auf, in welche ein Führungszylinder 18 aufgenommen ist. Der Führungszylinder 18 ist über zwei Hebelarme 9, welche in einem Winkel von im Wesentlichen 90 Grad von mindestens einem Kolben 13, 14 abstehen, mit den Nadelverschlussdüsen 2 bzw. deren Verschlussnadeln 3 gekoppelt. Der Hebelarm 9 bzw. seine Finger 9a,b umgreifen mit mindestens einer Ausnehmung 10 sowohl den Hals einer Distanzhülse 6 als auch den Nadelkopf 8. Die Distanzhülse 6 trifft beim Nadelverschluss auf einen Anschlag am Rand 40 des Heisskanalsblocks 25 und bestimmt so die Ausfahrdistanz der Verschlussnadel 3.

Der jeweilige Hebelarm 9 ist am Kolben 13, 14 beispielsweise, wie in Figuren 1a und 1b dargestellt, mittels Schrauben 39 befestigt, kann aber auch einstückig angeformt sein. Der Führungszylinder 18 ist mittels eines Befestigungsmittels 20, beispielsweise einer Befestigungsschraube 20, in einer ersten Befestigungsbohrung 19 des ersten (in Figuren 1a und 1b oben dargestellten) Kolbens 13 fixiert, während er in einer bevorzugterweise innerhalb eines Kugelkäfigs 21 laufenden zweiten Bohrung 22 des zweiten Kolbens 14 axial bewegbar ist (in Figuren 1a und 1b unten dargestellt). Der erste bzw. zweite Kolben 13, 14 weist einen ersten bzw. zweiten Kopfbereich 16, 17 auf, wobei die Kopfbereiche 16, 17 in der Antriebsanordnung voneinander weg weisen und je von einem Deckel 37 von der Oberfläche der Formplatten 26 der Verteilereinheit 1 abgeschirmt werden.

In dem in Figuren 1 a und 1b dargestellten Ausführungsbeispiel werden die beiden durch die zwei Hebelarme 9 übertragenen Betätigungen der Verschlussnadeln 3 synchron durchgeführt, d.h. entweder werden beide Verschlussnadeln 3 ausgefahren, oder beide eingefahren. Zu diesem Zweck ist der Führungszylinder 18 den beiden dargestellten Nadelverschlussdüsen 2 ein gemeinsames Führungselement. Durch die Bewegung des bzw. der Kolben 13, 14 trennen sich die beiden Hebelarme 9 (siehe Fig. 1b) und übertragen so eine Bewegung auf die Verschlussnadeln 3. Je nach Position des Kolbens 13,14 im Hohlraum ist entweder ein erster Kolbenraum 23a bzw. 24a zwischen Kopfbereich 16, 17 und Deckel 37 oder ein zweiter Kolbenraum 23b bzw. 24b auf der dem Führungszylinder 18 zugewandten Seite des Flansches 28 des Kolbens 13 bzw. 14 angeordnet. In der Regel bildet sich ein erster Kolbenraum 23a, 24a bei eingefahrener Verschlussnadel 3, wobei sich bei ausgefahrener Verschlussnadel 3 in der Regel ein zweiter Kolbenraum 23b, 24b bildet. Bei eingefahrener Verschlussnadel 3 weist der zweite Kolbenraum 23b, 24b ein viel kleineres Volumen auf als der erste Kolbenraum 23a, 24a, bevorzugterweise ein vernachlässigbar kleines Volumen. Umgekehrt weist bei ausgefahrener Verschlussnadel 3 der erste Kolbenraum 23a, 24a ein viel kleineres Volumen auf als der zweite Kolbenraum 23b, 24b, bevorzugterweise ein vernachlässigbar kleines Volumen. Die Kolbenräume 23a,b, 24a,b werden durch die Pneumatik oder Hydraulik für die Bewegung verwendet respektive mit Medium beaufschlagt.

Jede Verschlussnadel 3 weist an ihrem dem Düsenkopf 7 gegenüberliegenden Ende bzw. an ihrer Basis einen Nadelkopf 8 auf, welcher durch eine Ausnehmung 10 im Hebelarm 9 bzw. einem seiner Finger 9a,b umgriffen wird. Die Längsachse L1 verläuft im Wesentlichen in Längsrichtung mittig durch die Verschlussnadel 3. Die axiale Beweglichkeit der Verschlussnadel 3 ist durch den Finger 9a,b bzw. dessen Ausnehmung 10 zur Umgreifung des Nadelkopfes 8 sowie durch eine Ausbuchtung 36 im Heisskanalverteilerblock 25 nach hinten begrenzt, indem der Nadelkopf 8 in den genannten Elementen einen Anschlag findet. Die Begrenzung der Nadelbewegung nach vorne (bzw. in Richtung des Düsenkopfes 7) wird durch die Distanzhülse 6 ermöglicht, welche die Ausfahrposition der Verschlussnadel 2 definiert. Dabei sind Distanzhülsen 6 verschiedener Grössen einsetzbar, wodurch der Ein- bzw. Ausfahrweg der Verschlussnadel beliebig festlegbar ist. Die Distanzhülse 6 ist bevorzugterweise im Wesentlichen als Hohlzylinder mit umlaufendem Einstich ausgebildet, in welchen der Finger 9a,b des Hebelarms 9 eingreifen kann. Der durch die Bewegung der Verschlussnadel 2 definierte einfache Hub 11a beträgt die Hälfte des zwischen zwei Hebelarmen angeordneten doppelten Hubs 11, wenn die Verschlussnadeln 2 von zwei koaxial angeordneten Nadelverschlussdüsen 2 in ausgefahrener Position sind. Die Vorderkante der Distanzhülse definiert den vorderen Anschlag für die Verschlussnadel 3 am Rand 40 des Heisskanalverteilerblocks 25 und der hintere Anschlag ist gegeben durch den Vorsprung 36 im Heisskanalverteilerblock 25. Der Hebelarm 9 bzw. dessen Finger 9a,b greift bevorzugterweise sowohl in den umlaufenden Einstich der Distanzhülse 6 als auch um den am hinteren Ende der Distanzhülse 6 angeordneten Nadelkopf 8 herum, wobei der Nadelkopf 8 und der hinterseitig des umlaufenden Einstichs angeordnete Hohlzylinderabschnitt der Distanzhülse in die Ausnehmung 10 des Hebelarms 9 bzw. dessen Finger 9a,b zu liegen kommen.

Die Ebene E, welche als Spiegelebene in Bezug auf die koaxial angeordneten Nadelverschlussdüsen 2 parallel zu der Oberfläche des Heisskanalverteilerblocks 25 der Verteilereinheit 1 angeordnet ist, ist eine zentrale Mittelebene senkrecht zur Längsachse L1.

Figur 1a zeigt die beiden koaxialen Verschlussnadeln 3 in eingefahrener Position, d.h. der Kanal 5 ist für den Austritt von Giesswerkstoff offen. Die Hebelarme 9 liegen im Wesentlichen spaltlos bzw. ohne dazwischen liegenden doppelten Hub 11 aneinander an. Der erste Kolben 13 befindet sich in der vorliegenden Darstellung in einer Position, wo sich ein erster bzw. zweiter Kolbenraum 23a bzw. 24a zwischen dem Kopfbereich 16, 17 und dem Deckel 37 bildet. Die U-förmige Anordnung ist in Figuren 1a und 1b besonders gut sichtbar, wobei der dargestellte Finger 9a des darstellungsgemäss oberen Hebelarms 9 den Querbalken des nach oben offenen U's für die in Figur 1a oben dargestellte Nadelverschlussdüse 2 bildet, und der untere Finger 9b des unteren dargestellten Hebelarms 9b den Querbalken des nach unten offenen U's bildet. Die Winkel zwischen der Verschlussnadel 3 und dem Finger 9a,b des Hebelarms 9 sowie zwischen dem Finger 9a,b und dem Führungszylinder 18 betragen je im Wesentlichen 90 Grad.

Figur 1b zeigt, wie bereits Figur 1a, einen Ausschnitt aus einer Verteilereinheit 1 bzw. Zuführungsvorrichtung für ein Heisskanalsystem, jedoch diesmal mit ausgefahrenen Verschlussnadeln 3. Zwischen den beiden Hebelarmen 9 ist nun ein doppelter Hub 11 sichtbar, da die beiden Hebelarme 9 auseinandergepresst sind und die Hebelarme 9 je eine Verschlussnadel 3 nach aussen, auf die Öffnung 4 des Düsenkopfes 7 hin pressen. Die Öffnung 4 ist von der Verschlussnadel 3 verschlossen. In der Darstellung von Figur 1b tritt die Verschlussnadel 3 aus dem Düsenkopf 7 aus, was aber nicht unbedingt der Fall sein muss, um den Giesswerkstoff-Kanal 5 abzudichten. Durch die Bewegung des Kolbens 18 im Hohlraum wird das Volumen des ersten Kolbenraums 23a, 24a zugunsten vom zweiten Kolbenraum 23b, 24b, verkleinert bzw. umgekehrt. Der erste Kolbenraum 23a, 24a ist in Figur 1b praktisch verdrängt, also mit vernachlässigbar kleinem Volumen dargestellt. Am Fuss des Führungszylinders 18 in Figur 1b ist eine Abdichtbuchse 15 näher zum Hebelarm 9 hin dargestellt als in Figur 1a. Die beiden Nadelköpfe 8 liegen nicht mehr dem Vorsprung 36 auf, da sie von den beiden Hebelarmen 9 auseinander geschoben wurden.

Der erste bzw. zweite Kolbenraum 23a, 24a und der dritte bzw. vierte Kolbenraum 23b, 24b werden hydraulisch oder pneumatisch genutzt. Dabei wird beispielsweise bei einem pneumatischen System ein Druck erzeugt, mittels dem dann der Kolben 13, 14 betätigbar ist. Dies führt zu einer Bewegung des Führungszylinders 18 in axialer Richtung entlang der Längsachse L2. Die Bewegung des Führungszylinders 18 wird dann auf die Hebelarme 9 übertragen, welche über den Nadelkopf 8 die Verschlussnadeln 3 der Nadelverschlussdüsen 2 steuern. Die Verschlussnadel 3 kann dann in axialer Richtung entlang der Längsachse L1 bewegt werden, was zu einem Aus-oder Einfahren der Verschlussnadel 3 führt. Der Hub des Kolbens kann im Wesentlichen dem Hub der Verschlussnadel entsprechen. Der doppelte Hub 11 zwischen zwei Hebelarmen beträgt bevorzugterweise bei einer koaxialen Anordnung der Nadelverschlussdüsen 2 und einer koaxialen Anordnung der die Nadelverschlussdüsen 2 antreibenden Kolben 13, 14 im Wesentlichen zweimal dem einfachen Hub 11a der Verschlussnadel 3 bzw. eines Kolbens 13, 14.

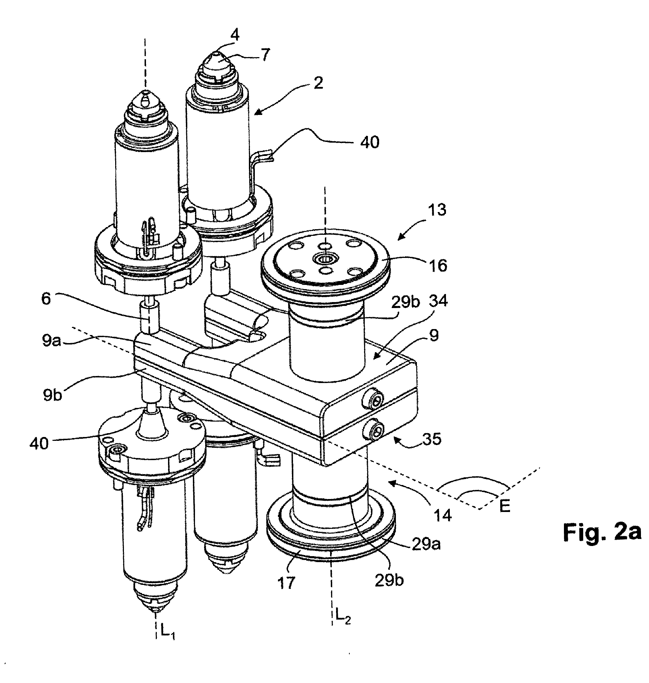

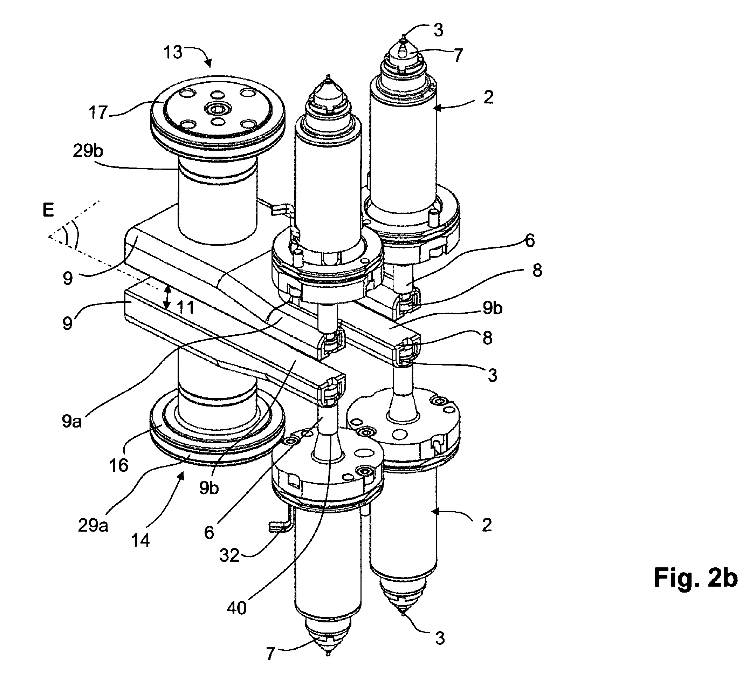

Figuren 2a und 2b zeigen vier Nadelverschlussdüsen 2 deren Verschlussnadeln 3 gemeinsam von den beiden dargestellten Kolben 13, 14 über zwei Hebelarme 9 betätigbar sind. Den beiden Figuren ist zu entnehmen, dass die Nadelverschlussdüsen 2 an den freien Enden der Finger 9a,b angekoppelt sind. Man kann von einer paarweisen Anordnung der Nadelverschlussdüsen 2 in axialer Richtung, d.h. entlang der Längsachse L1 der Nadelverschlussdüsen 2 an einem Finger 9a,b, als auch von einer paarweisen benachbarten Anordnung von zwei Nadelverschlussdüsen 2 auf einem gegabelten Hebelarm 9 sprechen, wobei im dargestellten Ausführungsbeispiel sämtliche vier Nadelverschlussdüsen 2 gleichzeitig bedienbar sind. Zwei Dichtungen 29a,b, welche beispielsweise Dichtungsgummiringe sind, umgeben den Umfang des Kopfbereiches 16, 17 und den Hals des Kolbens 13, 14.

Während Figur 2a vier offene Nadelverschlussdüsen 2, d.h. mit eingefahrener Verschlussnadel 3 und zwei aneinanderliegende Hebelarme 9 zeigt, sind in Figur 2b vier verschlossene Nadelverschlussdüsen 2 dargestellt, d.h. mit ausgefahrener Verschlussnadel 3. Zudem ist in Figur 2b sichtbar, wie jeweils das freie Ende eines Fingers 9a,b einen Nadelkopf 8 einer Verschlussnadel 3 und die Distanzhülse 6 umgreift. Entsprechend dem geschlossenen Zustand der Nadelverschlussdüsen 2 sind die beiden dargestellten Hebelarme 9 mit einem zwischen ihnen liegenden doppelten Hub 11 dargestellt.

Im Heisskanalverteilerblock 25 befindet sich ein Heisskanal, über den der durch die Blockheizleitung 31 auf Temperatur gehaltene flüssige Giesswerkstoff über Abzweigungen und Verteiler auf die verschiedenen durch Heizleitungen 32 im Mantel geheizte Nadelverschlussdüsen 2 verteilt wird. Der Giesswerkstoff, welcher durch eine Blockheizleitung 31 erhitzt wird, tritt an einer zentralen Verteilerbohrung 12 in den Heisskanalverteilerblock 25 ein und wird auf Verteiler geleitet, um dann durch Eintrittsöffnungen 38 in die einzelnen Nadelverschlussdüsen 2 bzw. deren Werkstoffkanäle 5 geführt zu werden.

Figur 3 zeigt ein bevorzugtes Ausführungsbeispiel der vorliegenden Erfindung in perspektivischer Ansicht, wobei der Heisskanalverteilerblock 25 mit eingesetzten Nadelverschlussdüsen 2 und Antriebssystemen dargestellt sind. Das dargestellte Ausführungsbeispiel umfasst eine Verteilereinheit 1 mit 32 Nadelverschlussdüsen 2, wobei 16 davon auf der einen, in Figur 3 dargestellten oberen Seite 34 der Verteilereinheit 1 angeordnet sind, und 16 davon auf der gegenüberliegenden unteren Seite 35 der Verteilereinheit 1 angeordnet sind. Pro vier Nadelverschlussdüsen 2 sind zwei Antriebssysteme mit je einem Kolben 13, 14 und einem Hebelarm 9 angeordnet. Die Verteilereinheit 1 von Figur 3 ist aber nicht vollständig dargestellt. Der rechten vorderen und hinteren 8er-Einheit fehlen in der Darstellung die unteren beiden Kolben 13, 14 und Hebelarme 9. Die hintere Reihe von Nadelverschlussdüsen 2 hat ausnahmslos ausgefahrene Verschlussnadeln 3, d.h. geschlossene Nadelverschlussdüsen 2, während die vordere Reihe von Nadelverschlussdüsen 2 lediglich offene Düsen 2, d.h. mit eingefahrenen Verschlussnadeln 3 aufweist. In der hinteren linken 8-er Einheit ist der doppelte Hub 11 zwischen den beiden Hebelarmen 9 bei ausgefahrener Verschlussnadel 3 zu erkennen, wobei in der vorderen linken 8-er Einheit die Hebelarme 9 des linken Hebelarmpaars ganz aneinanderliegen. Das rechte Hebelarmpaar weist mittig einen kleinen Hub auf, was auf ein intermediäres Stadium schliessen lässt, d.h. die Nadeln 3 sind dort weder ganz ein-, noch ganz ausgefahren.

### BEZUGSZEICHENLISTE

- 1: Verteilereinheit
- 2: Nadelverschlussdüse
- 3: Verschlussnadel
- 4: Nadelführung, Öffnung
- 5: Werkstoffkanal
- 6: Distanzhülse
- 7: Düsenkopf
- 8: Nadelkopf
- 9: Hebelarm
- 9a,b: Finger
- 10: Ausnehmung in 9
- 11: doppelter Hub
- 11 a: einfacher Hub
- 12: Heisskanal-Verteilerbohrung
- 13: erster Kolben
- 14: zweiter Kolben
- 15: Abdichtbuchse
- 16: Kopfbereich von 13
- 17: Kopfbereich von 14
- 18: Führungszylinder
- 19: Befestigungsbohrung
- 20: Befestigungsschraube
- 21: Kugelkäfig
- 22: zweite Bohrung
- 23a: erster Kolbenraum für 16
- 23b: zweiter Kolbenraum für 16
- 24a: erster Kolbenraum für 17
- 24b: zweiter Kolbenraum für 17
- 25: Heisskanalverteilerblock
- 26: Formplatten
- 27: Heizleitungsanschluss
- 28: Flansch von 13 bzw. 14
- 29a,b: Dichtungselemente
- 30: Kühlungskanal
- 31: Blockheizleitung
- 32: Heizleitung für 2
- 33: Öffnung in 25
- 34: erste Seite von 1
- 35: zweite Seite von 1
- 36: Vorsprung im Heisskanal
- 37: Deckel
- 38: Eintrittsöffnung für Giesswerkstoff in 2
- 39: Befestigungsmittel
- 40: Rand von 25
- L1: Längsachse durch 2
- L2: Längsachse durch Führungsrohr
- E: Mittelebene durch 2

## Patentansprüche

1. Verteilereinheit (1) für die Zuführung von Giesswerkstoff in einer Spritzgussanlage zur Verarbeitung von thermoplastischen Kunststoffen über ein Heisskanalsystem mit mindestens einer durch eine Verschlussnadel (3) verschliessbaren Nadelverschlussdüse (2), wobei die Verschlussnadel (3) durch ein hydraulisches, elektrisches, mechanisches oder pneumatisches Antriebssystem bewegbar ist,
**dadurch gekennzeichnet, dass**
die Nadelverschlussdüse eine erste Längsachse (L1) hat und dass das einen Kolben (13, 14) aufweisende Antriebssystem eine zweite Längsachse (L2) hat, wobei die erste Längsachse (L1) parallel und seitlich versetzt zur zweiten Längsachse (L2) angeordnet ist.

2. Verteilereinheit (1) nach Anspruch 1, **dadurch gekennzeichnet, dass** die Verschlussnadel (3) über einen Hebelarm (9) vom Kolben (13, 14) angetrieben wird, wobei die Verschlussnadel (3) im Wesentlichen senkrecht zum Hebelarm (9) angeordnet ist, und dass der Kolben (13, 14) des Antriebssystems mit seiner Längsachse (L2) im Wesentlichen senkrecht zum Hebelarm (9) angeordnet ist, sodass die Verschlussnadel (3), der Hebelarm (9) und der Kolben (13, 14) eine im Wesentlichen U-förmige Anordnung beschreiben.

3. Verteilereinheit (1) nach Anspruch 1 oder 3, **dadurch gekennzeichnet, dass** der Hebelarm (9) dazu geeignet ist, mit seinem freien Ende mindestens einen an einem einer Werkstoffaustrittsstelle entfernten Ende der Verschlussnadel (3) angeordneten Nadelkopf (8) und eine die Verschlussnadel teilweise umhüllende Distanzhülse (6) zu umgreifen.

4. Verteilereinheit (1) nach einem der Ansprüche 1 bis 3, **dadurch gekennzeichnet, dass** die Verteilereinheit (1) mindestens zwei Nadelverschlussdüsen (2) aufweist, deren Längsachsen (L1) koaxial angeordnet sind, wobei jede Nadelverschlussdüse (2) einen Düsenkopf (7) mit einer durch die Verschlussnadel (3) verschliessbaren Öffnung (4) für den Austritt des Giesswerkstoffs aufweist, wobei die Düsenköpfe (7) der beiden Nadelverschlussdüsen (2) in entgegengesetzte Richtungen voneinander weg weisen, und dass die Verschlussnadeln (3) der jeweils zwei koaxial angeordneten Nadelverschlussdüsen (2) durch zwei koaxial angeordnete Antriebssysteme bewegbar sind, wobei das erste Antriebssystem einen ersten Kolben (13) aufweist und das zweite Antriebssystem einen zweiten Kolben (14) aufweist, und wobei die Antriebssystemewenigstens ein gemeinsames Führungselement aufweisen.

5. Verteilereinheit (1) nach Anspruch 4, **dadurch gekennzeichnet, dass** das gemeinsame Führungselement ein Führungszylinder (18) ist, welcher bevorzugterweise in einer ersten axialen Befestigungsbohrung (19) des ersten Kolbens (13) und in einer zweiten axialen Bohrung (22) des zweiten Kolbens (14) angeordnet ist.

6. Verteilereinheit (1) nach Anspruch 5, **dadurch gekennzeichnet, dass** der erste Kolben (13) mit dem Führungszylinder (18) mittels einer in der ersten axialen Befestigungsbohrung (19) des ersten Kolbens (13) geführten Befestigungsschraube (20) verschraubt ist, und wobei der Führungszylinder (18) in der zweiten axialen Bohrung (22) des zweiten Kolbens (14), welche bevorzugterweise einen Kugelkäfig (21) aufweist, verschieblich bewegbar ist.

7. Verteilereinheit (1) nach einem der Ansprüche 4 bis 6, **dadurch gekennzeichnet, dass** der erste und der zweite Kolben (13, 14) ausgestaltet sind, über zwei parallel zueinander angeordnete Hebelarme (9) mindestens zwei Verschlussnadeln (3), welche in bevorzugt koaxial zueinander angeordneten und in entgegengesetzte Richtungen ausgerichteten Nadelverschlussdüsen (2) beweglich gelagert sind, zu betätigen.

8. Verteilereinheit (1) nach einem der Ansprüche 2 bis 7, **dadurch gekennzeichnet, dass** der Hebelarm (9) dazu geeignet ist, mindestens eine, bevorzugterweise zwei oder mehr Verschlussnadeln (3), welche in parallel zueinander angeordneten und in die gleiche Richtung ausgerichteten Nadelverschlussdüsen (2) gelagert sind, zu betätigen.

9. Verteilereinheit (1) nach einem der vorhergehenden Ansprüche, **dadurch gekennzeichnet, dass** die Verteilereinheit (1) mindestens zwei Nadelverschlussdüsen (2) aufweist, deren Längsachsen (L1) parallel und seitlich versetzt zueinander angeordnet sind, wobei die Düsenköpfe (7) der beiden Nadelverschlussdüsen (2) in die gleiche Richtung weisen, und wobei jede Nadelverschlussdüse (2) einen Düsenkopf (7) mit einer durch die Verschlussnadel (3) verschliessbaren Öffnung (4) für den Austritt des Giesswerkstoffs aufweist, und dass die Verschlussnadeln (3) der Nadelverschlussdüsen (2) durch ein gemeinsames Antriebssystem bewegbar sind.

10. Verteilereinheit (1) nach einem der Ansprüche 2 bis 9, **dadurch gekennzeichnet, dass** der Hebelarm (9) gabelförmig zu mindestens zwei Fingern (9a, 9b) ausgebildet ist, wobei jeweils ein Finger (9a, 9b) an seinem freien Ende bevorzugterweise eine Ausnehmung (10) aufweist, welche geeignet ist, den Nadelkopf (8) und die Distanzhülse (6) der Verschlussnadel (3) zu umgreifen.

11. Verteilereinheit (1) nach einem der vorhergehenden Ansprüche, **dadurch gekennzeichnet, dass** zwei koaxial angeordnete Kolben (13, 14) zusammen mindestens vier Verschlussnadeln (3) antreiben, wobei die Hälfte der vier Nadelverschlussdüsen (2), in welchen je eine Verschlussnadel (3) aufgenommen ist, auf einer ersten Seite (34) der Verteilereinheit (1) angeordnet ist und die andere Hälfte der Nadelverschlussdüsen (2) an einer der ersten Seite (34) gegenüberliegenden zweiten Seite (35) der Verteilereinheit (1) angeordnet ist.

12. Verteilereinheit (1) nach einem der Ansprüche 2 bis 11, **dadurch gekennzeichnet, dass** jeder Hebelarm (9) eine gerade Anzahl von Fingern (9a,b) aufweist, und dass bevorzugterweise der Hebelarm (9) mit mindestens zwei, bevorzugt zwei oder vier Fingern (9a, b) ausgebildet ist, wobei jeder Finger (9a,b) zur Betätigung einer Verschlussnadel (3) geeignet ist.

13. Verteilereinheit (1) nach Anspruch 10 bis 12, **dadurch gekennzeichnet, dass** die Finger (9a, b) kreis- oder sternförmig am Hebelarm (9) um den Kolben (13, 14) herum angeordnet sind.

14. Verteilereinheit (1) nach einem der Ansprüche 5-13, **dadurch gekennzeichnet, dass** der Hebelarm (9) in mindestens eine Öffnung (33) eines Heisskanalverteilerblocks (25) eingreift, in welchem die mindestens eine Nadelverschlussdüse (3) angeordnet ist, wobei das mindestens eine Antriebssystem ausserhalb des Heisskanalverteilerblocks (25) angeordnet ist.

15. Verteilereinheit (1) nach einem der vorangehenden Ansprüche, **dadurch gekennzeichnet, dass** das Antriebssystem geeignet ist, mehrere parallel und seitlich versetzt zueinander angeordnete Nadelverschlussdüsen (3) zu bedienen, wobei die Nadelverschlussdüsen (3) entweder über einen gemeinsamen Finger (9a,b) oder über verschiedene parallel zueinander angeordnete Finger (9a,b) eines Hebelarms (9) mit dem Kolben (13, 14) gekoppelt sind.
